# FASCICULE DE BREVET EUROPEEN

(11) **EP 1 479 593 B1**
(45) Date de publication et mention de la délivrance du brevet: **27.02.2008**
(21) Numéro de dépôt: 04291130.5
(22) Date de dépôt: 03.05.2004
(51) Int. Cl.: B62D 1/19

(54) **Dispositif d'absorption modulable d'energie à charges pyrotechniques d'une colonne de direction de vèhicule automobile**
Modulierbare Kraftfahrzeug-Lenksäulen-Energieabsorptionseinrichtung mit pyrotechnischer Auslösung
Vehicle steering column with adjustable energy absorbing means and pyrotechnic actuators

(30) Priorité: 19.05.2003 FR 0306000
(43) Date de publication de la demande: 24.11.2004
(73) Titulaire: NACAM France S.A., 41100 Vendôme (FR)
(72) Inventeur: Gatti, Jean-Marc, 41100 Vendome (FR); Giboureau, Gerald, 37100 Tours (FR)
(74) Mandataire: Cabinet Martinet & Lapoux

(56) Documents cités:
- DE-A- 19 961 016
- DE-C- 19 542 491
- GB-A- 1 296 527
- GB-A- 1 584 984
- US-A- 4 989 898
- US-A- 5 755 461
- US-A1- 2002 020 999
- US-B1- 6 367 840
- PATENT ABSTRACTS OF JAPAN vol. 0080, no. 94 (M-293), 28 avril 1984 (1984-04-28) -& JP 59 008560 A (ISUZU JIDOSHA KK), 17 janvier 1984 (1984-01-17)

## Description

La présente invention se rapporte à une colonne de direction d'un véhicule automobile avec un dispositif d'absorption modulable d'énergie pour la colonne de direction, ce dispositif d'absorption agit directement suivant la direction du choc et met en oeuvre une ou des charges pyrotechniques.

Le document DE19542491 décrit une colonne de direction d'un véhicule automobile, ladite colonne de direction comprenant un dispositif d'absorption modulable d'énergie de la colonne de direction, qui comprend un arbre de direction monté tournant dans un tube-corps autour d'un axe de direction, ledit tube corps étant relié à un ensemble support qui est fixé au châssis du véhicule, ledit système d'absorption modulable d'énergie consistant en un élément support fixe qui est solidaire du châssis du véhicule, et un élément support mobile qui est relié à l'élément support fixe afin de constituer l'ensemble support, l'élément support mobile étant relié et bloqué sur l'élément support fixe à une valeur déterminée afin que ce blocage cesse en cas de choc, et que rentre en action ledit dispositif d'absorption modulable d'énergie, ledit dispositif d'absorption modulable d'énergie comportant un ensemble d'absorption d'énergie qui a un élément d'absorption de longueur et de section déterminées, ledit élément d'absorption comprenant une première portion d'extrémité raccordée à l'élément support mobile, une portion centrale de forme allongée sensiblement suivant la direction de l'effort à amortir, et qui est repliée sur elle-même avec une courbure déterminée autour d'un axe sensiblement perpendiculaire à la direction de l'effort à amortir, qui est disposée entre une face d'appui de l'élément support fixe et une face d'appui de l'élément support mobile, la longueur et la section de la portion centrale ayant des valeurs déterminées par la quantité d'énergie à absorber, et une deuxième portion d'extrémité raccordée à l'élément support fixe par une tige de maintien, l'élément support fixe étant fixé au châssis du véhicule, la tige de maintien étant une tige de maintien mobile suivant son axe, par l'intermédiaire de moyens de déplacement magnétiques, qui sont mis en action par des moyens de commande.

Le dispositif selon l'invention s'applique notamment à une colonne de direction réglable en profondeur ou en inclinaison ou bien à une colonne de direction réglable en profondeur et en inclinaison, dont l'arbre de direction est monté dans un tube-corps, qui est supporté et bloqué sur la carrosserie à la position voulue. La colonne de direction comprend un arbre de direction monté tournant dans un tube-corps, qui est relié à un ensemble support fixé au châssis du véhicule ou à un élément de la carrosserie. L'invention peut s'appliquer également à une colonne de direction non réglable ; dans ce cas, le tube-corps est monté directement dans l'ensemble support.

L'amélioration croissante de la sécurité sur les colonnes de direction demande aux constructeurs de maîtriser tous les paramètres des systèmes d'absorption d'énergie. Ainsi, en ce qui concerne le procédé d'absorption d'énergie sur une colonne de direction, il est envisagé de moduler cette absorption d'énergie suivant les caractéristiques du conducteur tel que notamment le poids du conducteur et le fait qu'il ait attaché sa ceinture ou non, la position du conducteur par rapport au volant ainsi que la vitesse du véhicule, qui agissent sur le volant en cas de choc.

L'objectif de la présente invention est de fournir un dispositif d'absorption modulable d'énergie, qui agit directement selon la direction du choc et qui mette en oeuvre des éléments d'absorption d'énergie simples et faciles à réaliser, tout en permettant d'absorber de façon quantifiée tout ou partie de l'énergie à dissiper qui est demandée et qui tient compte des caractéristiques du conducteur et du véhicule, tout en se montant facilement dans l'encombrement des colonnes de direction existantes.

Cet objectif est atteint par une colonne de direction selon la revendication 1.

L'invention se rapporte à un dispositif d'absorption modulable d'énergie d'une colonne de direction de véhicule automobile, qui comprend un arbre de direction monté tournant dans un tube corps autour d'un axe de direction. Le tube-corps est relié à un ensemble support qui est fixé au châssis du véhicule.

Un élément support fixe est solidaire du châssis du véhicule, et un élément support mobile est relié à l'élément support fixe afin de constituer l'ensemble support. L'élément support mobile est relié et bloqué sur l'élément support fixe à une valeur déterminée afin que ce blocage cesse en cas de choc et afin que rentre en action le dispositif d'absorption.

Le dispositif d'absorption comprend en outre au moins un ensemble d'absorption d'énergie qui comprend deux ou trois éléments d'absorption de longueur et de section déterminées. Chaque élément d'absorption comprend une première portion d'extrémité, une portion centrale et une deuxième portion d'extrémité. La première portion d'extrémité de l'élément d'absorption est raccordée à l'élément support mobile par une tige de maintien. La portion centrale d'élément d'absorption est de forme allongée sensiblement suivant la direction de l'effort à amortir, et est repliée sur elle-même avec une courbure déterminée autour d'un axe sensiblement perpendiculaire à la direction de l'effort à amortir. La deuxième portion d'extrémité est raccordée à l'élément support fixe par une tige de maintien. Au moins l'une des tiges de maintien est mobile suivant son axe par l'intermédiaire de moyens de déplacement pyrotechniques qui sont mis en action par des moyens de commande.

En cas de choc et suivant la valeur de paramètres retenus, l'élément support mobile est relié à l'élément support fixe par un nombre voulu d'éléments d'absorption de façon que l'élément support mobile relié au tube-corps, et donc au volant, se déplace par rapport à l'élément support fixe en absorbant tout ou partie de l'énergie à dissiper demandée.

Les moyens de commande de déplacement pyrotechniques sont agencés de manière qu'en cas de choc, l'élément support mobile relié au tube-corps donc au volant se déplace par rapport à l'élément support fixe en absorbant tout ou partie de l'énergie à dissiper demandée.

Chacun des deux au moins éléments d'absorption de l'ensemble d'absorption d'énergie a une section déterminée qui lui est propre de manière à absorber une quantité particulière d'énergie.

Dans le cas d'un seul élément d'absorption, l'élément support mobile est relié à l'élément support fixe par aucun élément d'absorption, ou par l'élément d'absorption. Au moins l'un des éléments d'absorption a une tige de maintien mobile. Les moyens de commande de déplacement pyrotechniques sont agencés de manière qu'en cas de choc, l'élément support mobile soit relié à l'élément support fixe :
- par aucun élément d'absorption ; ou
- par le premier élément d'absorption ; ou
- par le deuxième élément d'absorption ; ou
- par les deux éléments d'absorption;
de façon que l'élément support mobile relié au tube-corps et donc au volant se déplace par rapport à l'élément support fixe en absorbant tout ou partie de l'énergie à dissiper demandée.

Dans le cas de trois éléments d'absorption, au moins un élément d'absorption a une tige de maintien mobile. L'élément support mobile est relié à l'élément support fixe :
- par aucun élément d'absorption ; ou
- par le premier élément d'absorption ; ou
- par le deuxième élément d'absorption ; ou
- par le troisième élément d'absorption ; ou
- par le premier avec le deuxième élément d'absorption ; ou
- par le premier avec le troisième élément d'absorption ; ou
- par le deuxième avec le troisième élément d'absorption ; ou
- par les trois éléments d'absorption.

La portion centrale de l'élément ou de chaque élément d'absorption est une lamelle de section rectangulaire ou carrée, qui est disposée entre une face d'appui de l'élément support fixe et une face d'appui de l'élément support mobile. Ainsi, il n'existe aucun frottement relatif entre la face externe par rapport à la pliure de ladite lamelle et chacune desdites faces d'appui pendant le choc. La longueur et la section de la portion centrale ont des valeurs déterminées par la quantité d'énergie à absorber.

La lamelle peut être du type à section constante ou variant uniformément ou par paliers.

Dans le cas d'un ensemble d'absorption à deux éléments d'absorption, la première portion d'extrémité de l'un des deux éléments d'absorption forme une seule embase avec la première portion d'extrémité de l'autre élément. L'embase comporte au moins un trou recevant un élément de fixation sur l'élément support mobile.

Dans le cas d'un ensemble d'absorption à trois éléments d'absorption, les premières portions d'extrémité des trois éléments d'absorption forment une seule embase. Ladite embase comporte au moins un trou recevant un élément de fixation sur l'élément support mobile.

Dans une architecture particulièrement intéressante de l'invention, l'élément support fixe comporte une plaque qui se fixe d'un côté contre la structure du véhicule, et qui porte de l'autre côté deux montants sensiblement parallèles au plan vertical passant par l'axe de direction.

L'élément support mobile comporte deux montants sensiblement parallèles au plan vertical et un élément de raccordement. Les deux montants s'engagent et coulissent en cas de choc dans les deux montants de l'élément support fixe. L'élément de raccordement est situé du côté de l'élément support fixe, et à une certaine distance de la plaque de l'élément support fixe pour permettre de loger l'ensemble d'absorption d'énergie entre la face d'appui de l'élément support fixe et la face d'appui de élément support mobile. Lesdites faces d'appui se font face et sont sensiblement parallèles l'une par rapport à l'autre, et sensiblement perpendiculaires au plan vertical de l'axe de direction.

L'ensemble d'absorption comprend trois éléments d'absorption dont chaque première extrémité est raccordée à une embase commune munie de deux trous recevant chacun un élément de fixation dans un trou correspondant ménagé dans l'élément de raccordement. La deuxième extrémité de l'élément d'absorption centrale comporte un trou de passage d'une tige de maintien mobile suivant son axe et appartenant à un actionneur pyrotechnique. La deuxième extrémité de chaque élément d'absorption latéral comporte un trou de passage d'une tige de maintien fixe.

Chaque tige de maintien fixe est constituée par un élément de fixation dans un trou correspondant ménagé dans l'élément support fixe.

Le trou de passage de la tige de maintien mobile appartenant à un actionneur pyrotechnique comporte une partie circulaire ajustée avec la tige de maintien mobile. La partie circulaire se prolonge dans le sens du coulissement par un trou oblong plus étroit destiné à recevoir un étranglement ménagé dans la tige de maintien mobile pour assurer le blocage de sa position en cas de choc.

Le dispositif d'absorption modulable d'énergie selon l'invention présente ainsi l'avantage d'avoir une structure simple à réaliser, avec une garantie de qualité de fabrication lorsqu'elle est réalisée en très grande série, comme c'est le cas de l'industrie automobile. De plus, le dispositif s'adapte facilement à l'encombrement des colonnes de direction existantes. Enfin, le dispositif d'absorption modulable d'énergie permet d'adapter l'absorption d'énergie à tout ou partie de celle demandée, en tenant compte notamment du poids du conducteur, et de sa position par rapport au volant, de la ceinture de sécurité et de la vitesse du véhicule tout en préservant une même course de déroulement.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue éclatée en perspective du dispositif d'absorption modulable d'énergie à charge pyrotechnique selon l'invention ;
- la figure 2 est une coupe suivant le plan vertical passant par l'axe de direction de la figure 1, la colonne de direction étant en position de conduite ;
- la figure 3 est une coupe analogue à la figure 2 après un choc, la tige de l'actionneur pyrotechnique étant engagée ;
- la figure 4 est une vue analogue à la figure 2 après un choc, la tige de l'actionneur n'étant pas engagée ;
- la figure 5 est une vue en perspective après le choc d'un élément d'absorption d'énergie à section constante ;
- la figure 5A représente la courbe de variation de l'effort résistant de l'élément d'absorption de la figure 5 ;
- les figures 6 et 7 sont des vues en perspective d'éléments d'absorption à section variable après le choc, respectivement ;
- les figures 6A et 7A représentent respectivement des courbes de variation d'effort résistant pour les éléments d'absorption selon les figures 6 et 7 ;
- les figures 8 et 9 sont des vues en perspective d'éléments d'absorption à section variable par paliers avant le choc, respectivement ;
- les figures 8A et 9A représentent des courbes de variation d'effort résistant pour les éléments d'absorption selon les figures 8A et 9A, respectivement ;
- les figures 8B et 9B sont des vues des éléments d'absorption des figures 8 et 9 après le choc, respectivement ;
- la figure 10 est une vue en perspective d'un ensemble d'absorption d'énergie à trois éléments ;
- les figures 11 à 14 représentent différentes positions de l'ensemble d'absorption d'énergie de la figure 10 ;
- la figure 15 est une vue en perspective d'un ensemble d'absorption d'énergie à deux éléments ;
- la figure 16 représente les courbes de variation correspondant aux figures 11 à 14 ;
- la figure 17 est une vue analogue à la figure 16 pour des éléments d'absorption d'énergie à section variable par paliers ;
- la figure 18 est une vue partielle de la figure 2 ;
- la figure 19 est une vue prise le long de la ligne XIX - XIX de la figure 18 ;
- la figure 20 est une vue partielle de la figure 3 ; et
- la figure 21 est une vue prise le long de la ligne XXI - XXI de la figure 20.

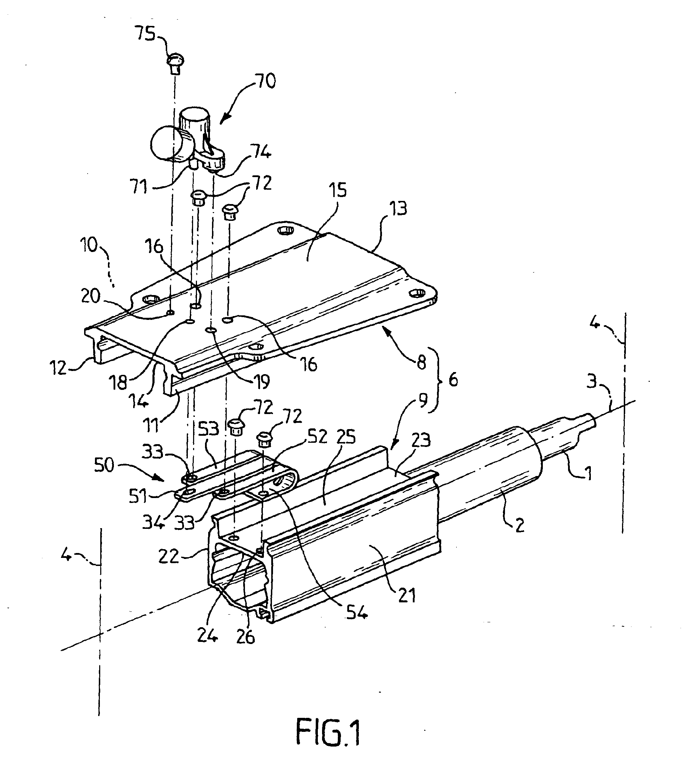

Comme on peut le voir sur la figure 1, la colonne de direction de véhicule automobile comprend un arbre de direction 1 qui est monté tournant dans un tube-corps 2 autour d'un axe de direction 3. Le tube-corps 2 est relié à un ensemble support 6 par un système de réglage en position en profondeur ou en inclinaison, ou par un système de réglage en profondeur et en inclinaison. L'invention peut s'appliquer également à une colonne de direction non réglage, dans ce cas le tube-corps 2 est relié directement à l'ensemble support 6.

L'ensemble support 6 comprend un élément support fixe 8 et un élément support mobile 9. L'élément support fixe 8 est solidaire du châssis 10 du véhicule ou d'un élément de carrosserie. L'élément support mobile 9 est relié au tube-corps 2 par le système de réglage en position. L'élément support mobile 9 est relié à l'élément support fixe 8, et ledit élément support mobile 9 est bloqué sur ledit élément support fixe à une valeur déterminée, qui tient compte du choc à absorber afin de permettre dans ce cas à l'élément support mobile 9 de coulisser dans l'élément support fixe 8.

Le plan vertical passant par l'axe de direction 3 est référencé 4.

Dans la suite de la description et pour un même élément, on appellera interne ou intérieur par rapport à l'axe de direction 3, ce qui est le plus près de cet axe de direction 3,et externe ou extérieur ce qui est le plus éloigné dudit axe.

On appellera plan vertical, un plan qui est parallèle au plan vertical 4 passant par l'axe de direction 3.

L'élément support mobile 9 est relié et bloqué sur l'élément support fixe 8 à une valeur déterminée afin que ce blocage cesse en cas de choc, et que rentre en action le dispositif d'absorption modulable d'énergie de l'invention comporte au moins un ensemble d'absorption d'énergie référencé 50 dans le cas de la figure 1.

L'élément support fixe 8 comporte une plaque 13 qui se fixe d'un côté 15 contre la structure du véhicule 10, et qui porte de l'autre côté 14 deux montants 11 et 12 sensiblement parallèles au plan vertical 4 passant par l'axe de direction 3. Le côté 14 est la face d'appui inférieure de la plaque 13 et le côté 15 est la face d'appui supérieure de la plaque 13.

L'ensemble d'absorption 50 comprend trois éléments d'absorption : un élément d'absorption centrale 51 et deux éléments d'absorption latéraux 52 et 53.

L'élément support mobile 9 comporte deux montants 21 et 22 sensiblement parallèles au plan vertical 4 et un élément de raccordement 23. Les deux montants 21 et 22 viennent s'engager et coulisser en cas de choc dans les deux montants 11 et 12 de l'élément support fixe 8. L'élément de raccordement 23 est situé du côté de la plaque 13 de l'élément support fixe 8. L'élément de raccordement 23 est disposé à une certaine distance de la plaque 13 de l'élément support fixe 8 pour permettre de loger l'ensemble d'absorption d'énergie 50 entre la face d'appui 14 de l'élément support fixe 8 et la face d'appui 25 de élément support mobile 9. Les faces d'appui 14 et 25 se font face et sont sensiblement parallèles l'une par rapport à l'autre, et sensiblement perpendiculaires au plan vertical 4 de l'axe de direction 3.

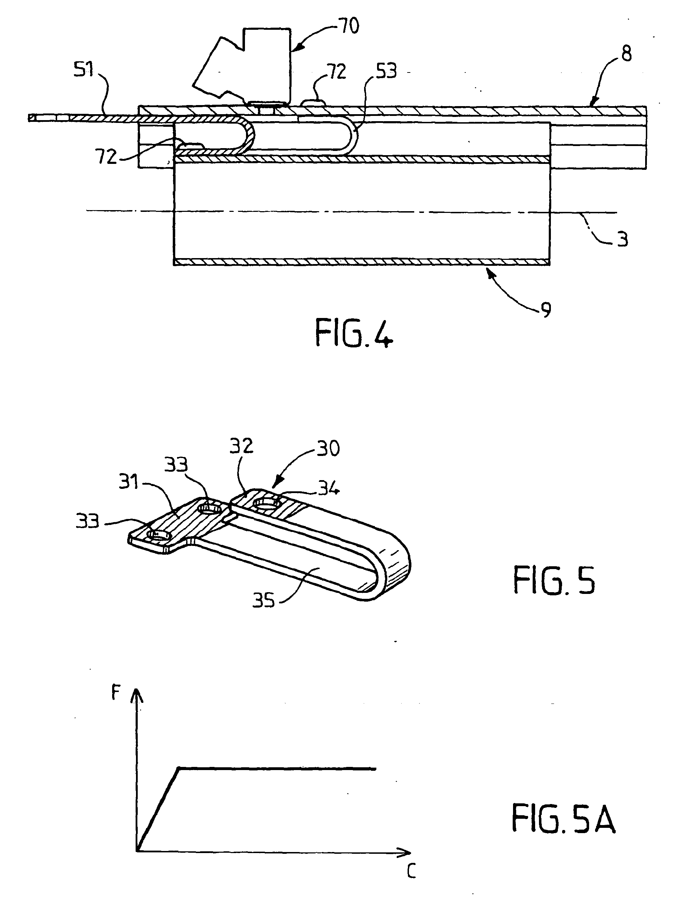

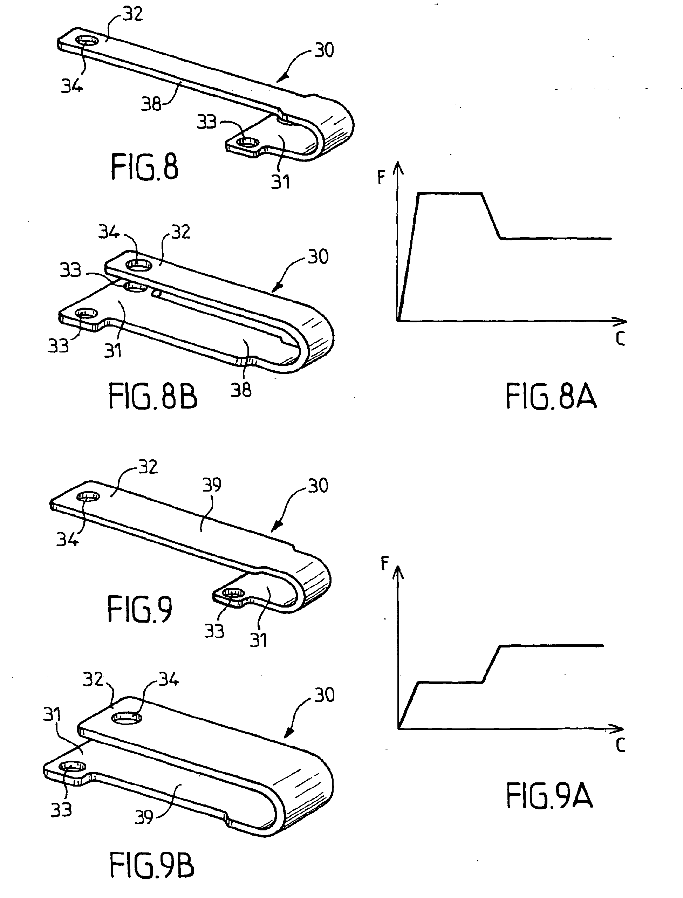

Comme on peut le voir sur les figures 5 et 9B, l'ensemble d'absorption d'énergie comprend au moins un élément d'absorption 30 de longueur et de section déterminées. L'élément d'absorption 30 comprend une première portion d'extrémité 31, une portion centrale 35, 39 et une deuxième portion d'extrémité 32. La portion centrale 35, 39 de l'élément d'absorption 30 est de forme allongée suivant un axe qui a sensiblement la même direction que l'effort à amortir.

La première portion d'extrémité 31 de l'élément d'absorption 30 est raccordée à l'élément support mobile 9 par une tige de maintien 72.

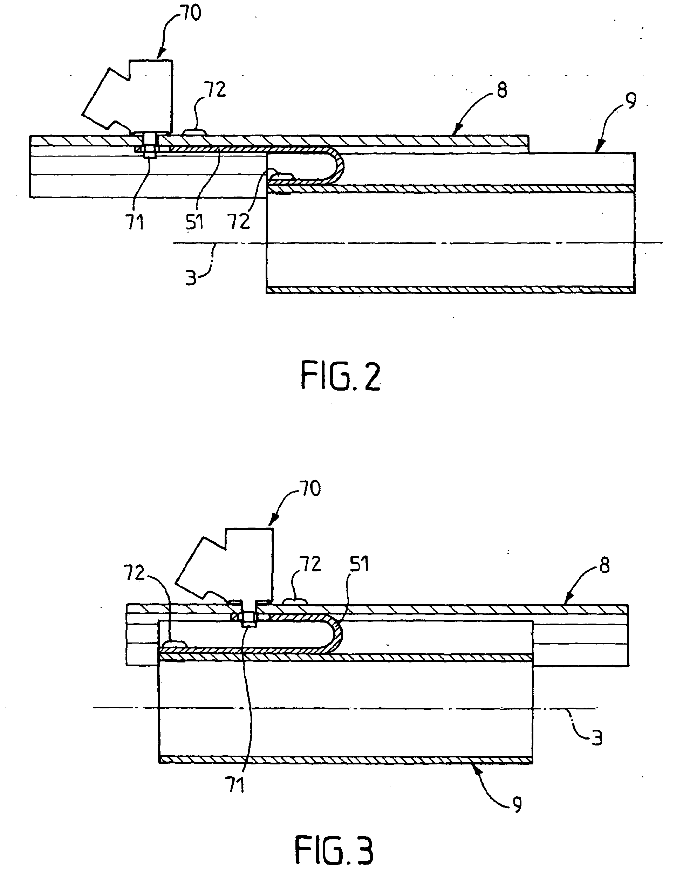

La deuxième portion d'extrémité 32 de l'élément d'absorption 30 est raccordée à l'élément support fixe 8 par une tige de maintien 71. Ces deux types de raccordement avec l'élément d'absorption 51 sont représentés sur les figures 2, 3 et 4.

L'élément d'absorption 30 est replié sur lui-même autour d'un axe sensiblement perpendiculaire à la direction de l'effort à amortir, avec au niveau de la pliure, un rayon de courbure déterminé.

L'élément d'absorption 30 est agencé entre la face d'appui 14 de l'élément support fixe 8 et la face d'appui 25 de l'élément support mobile 9 de façon qu'il n'existe aucun frottement relatif, pendant le choc. Il n'y a donc pas de frottement entre l'élément d'absorption 30 et la face d'appui 14 de l'élément support fixe 8 et entre l'élément d'absorption 30 et la face d'appui 25 de l'élément support mobile 9. L'élément d'absorption 30 reste toujours lié à l'élément support fixe 8 et à l'élément support mobile 30 durant le choc.

L'une des tiges de maintien est une tige de maintien mobile 71 suivant son axe. Cela s'effectue par l'intermédiaire de moyens de déplacement pyrotechniques qui sont mis en action par des moyens de commande. Ainsi en cas de choc, et suivant la valeur des paramètres retenus, l'élément support mobile 9 est relié à l'élément support fixe 8 par un nombre voulu d'éléments d'absorption 30, de façon que l'élément support mobile 9 relié au tube-corps 2 donc au volant se déplace par rapport à l'élément support fixe 8 en absorbant tout ou partie de l'énergie à dissiper demandée.

La portion centrale de l'élément ou de chaque élément d'absorption est une lamelle de section rectangulaire ou carrée. La lamelle est disposée entre la face d'appui 14 de l'élément support fixe 8 et la face d'appui 25 de l'élément support mobile 9. Ainsi, il n'existe aucun frottement relatif entre la face externe par rapport à la pliure de ladite lamelle et chacune desdites faces d'appui 14 et 15 pendant le choc. La longueur et la section de la portion centrale ou lamelle ont des valeurs déterminées par la quantité d'énergie à absorber.

Comme cela est représenté sur les figures 5 et 9B, l'ensemble d'absorption 30 comprend un seul élément d'absorption 30 qui a une première portion d'extrémité 31 et une deuxième portion d'extrémité 32. La première portion d'extrémité 31 comporte deux trous 33 de passage d'une tige de maintien fixe c'est-à-dire d'un élément de fixation ou vis de fixation 72 dans des trous 26 de l'élément support mobile 9. La deuxième portion d'extrémité 32 comporte un trou de passage 34 d'une tige de maintien mobile 71 mise en mouvement par l'actionneur pyrotechnique.

Dans le cas d'ensemble d'absorption d'énergie à plusieurs éléments d'absorption, certains éléments d'absorption pourront avoir une deuxième portion d'extrémité 32 avec une tige de maintien fixe et un trou de passage 34.

Dans le cas de la figure 5, la lamelle 35 a une section constante depuis la première portion d'extrémité 31. La variation de l'effort résistant F en fonction de la course C est représentée sur la figure 5A, qui après une montée initiale se stabilise.

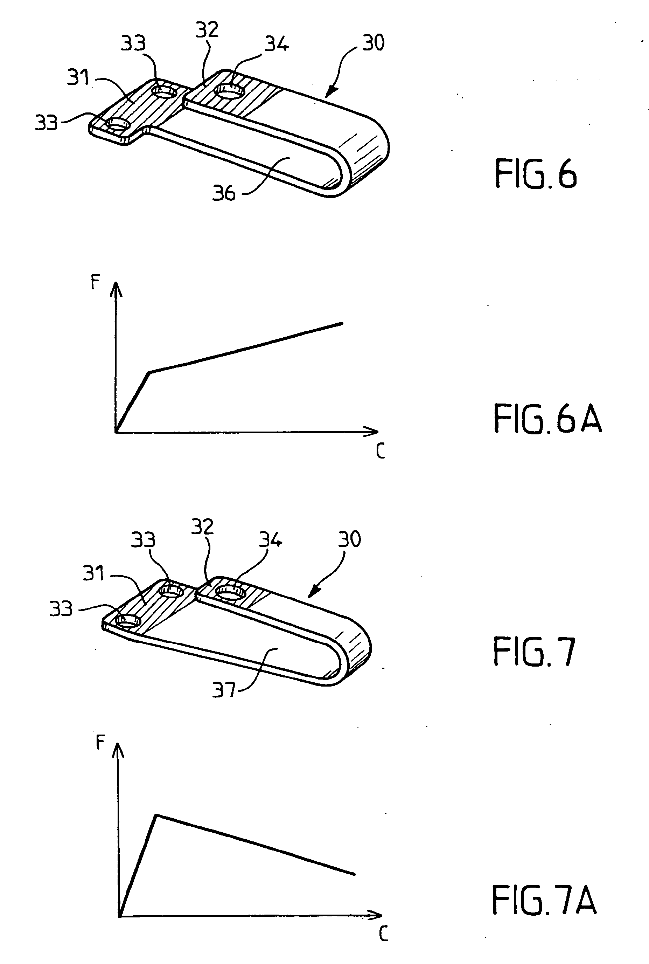

Dans le cas de la figure 6, la lamelle 36 a une section variant uniformément en augmentant depuis la première portion d'extrémité 31. La variation de l'effort résistant F en fonction de la course C est représentée sur la figure 6A, qui après une montée initiale augmente.

Dans le cas de la figure 7, la lamelle 37 a une section variant uniformément en diminuant depuis la première portion d'extrémité 31. La variation de l'effort résistant F en fonction de la course C est représentée sur la figure 7A, qui après une montée initiale diminue.

Dans le cas des figures 8 et 8B, la lamelle 38 a une section variant par palier avec un premier palier de section plus forte depuis la première portion d'extrémité 31. La variation de l'effort résistant F en fonction de la course C est représentée sur la figure 8A, qui après une montée initiale se stabilise à un premier palier, puis à un deuxième palier plus faible.

Dans le cas des figures 9 et 9B, la lamelle 39 a une section variant par paliers avec un premier palier de section plus faible depuis la première portion d'extrémité 31. La variation de l'effort résistant F en fonction de la course C est représentée sur la figure 9A, qui après une montée initiale se stabilise à un premier palier, puis à un deuxième palier plus fort.

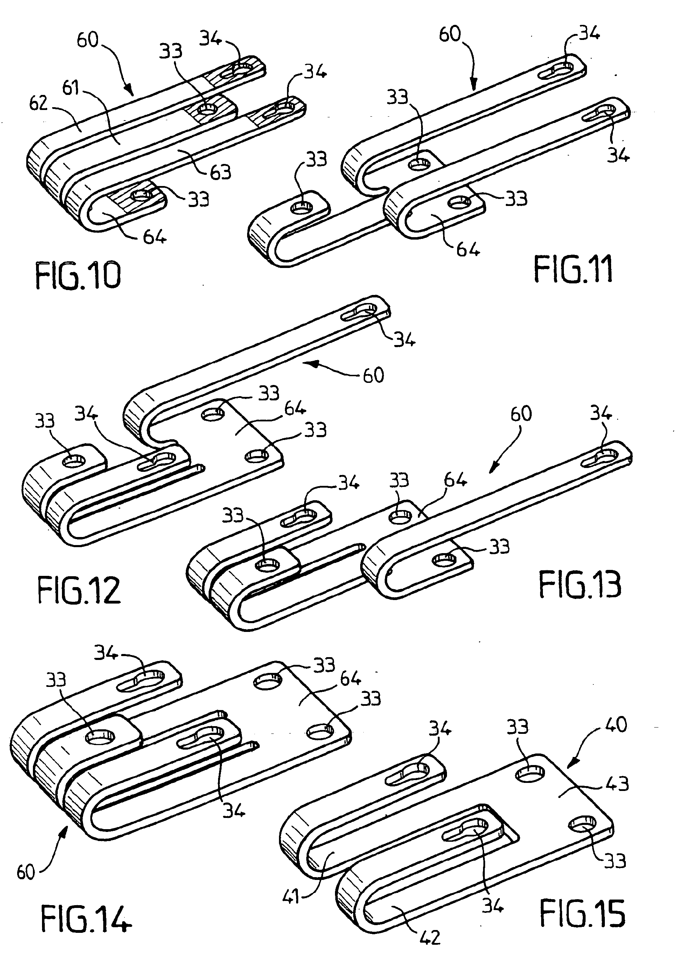

Dans le mode de réalisation représenté sur la figure 15, l'ensemble d'absorption référencé 40 comprend deux éléments d'absorption 41 et 42, dont la première portion d'extrémité 31 du premier élément 41 forme une seule embase 43 avec la première portion d'extrémité 31 du deuxième élément 42. L'embase 43 comporte deux trous 33 recevant un élément de maintien fixe ou vis de fixation 72 sur l'élément support mobile 9.

Chacun des éléments d'absorption 41 et 42 a une deuxième portion d'extrémité 32, qui comporte un trou de passage 34 d'une tige de maintien mobile 71.

Dans le mode de réalisation représenté sur la figure 10 et les figures 11 à 14, l'ensemble d'absorption référencé 60 comprend trois éléments d'absorption 61, 62 et 63. Les trois premières portions d'extrémité 31 des éléments 61, 62 et 63 forment une seule embase 64. L'embase 64 comporte deux trous 33 recevant un élément de maintien ou vis de fixation 72 sur l'élément support mobile 9.

Chacun des éléments d'absorption 61, 62 et 63 a une deuxième portion d'extrémité 32. L'élément central 61 a une deuxième portion d'extrémité 32 qui comporte un trou de passage 33 d'une tige de maintien fixe ou vis de fixation 72. Chaque élément vertical 62 ou 63 a une deuxième portion d'extrémité 32 qui comporte un trou de passage 34 d'une tige de maintien mobile 71.

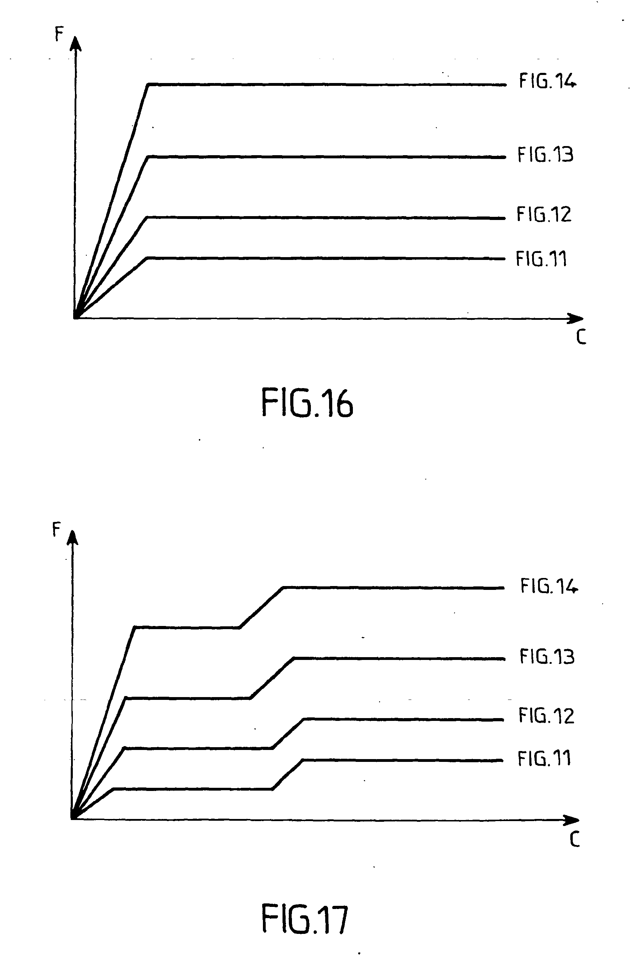

La figure 16 représente les courbes de variation de l'effort résistant F pour une lamelle 35 à section constante et pour les différentes configurations des figures 11 à 14.

La figure 17 représente les courbes de variation de l'effort résistant F pour une lamelle 39 à section variant par paliers en augmentant.

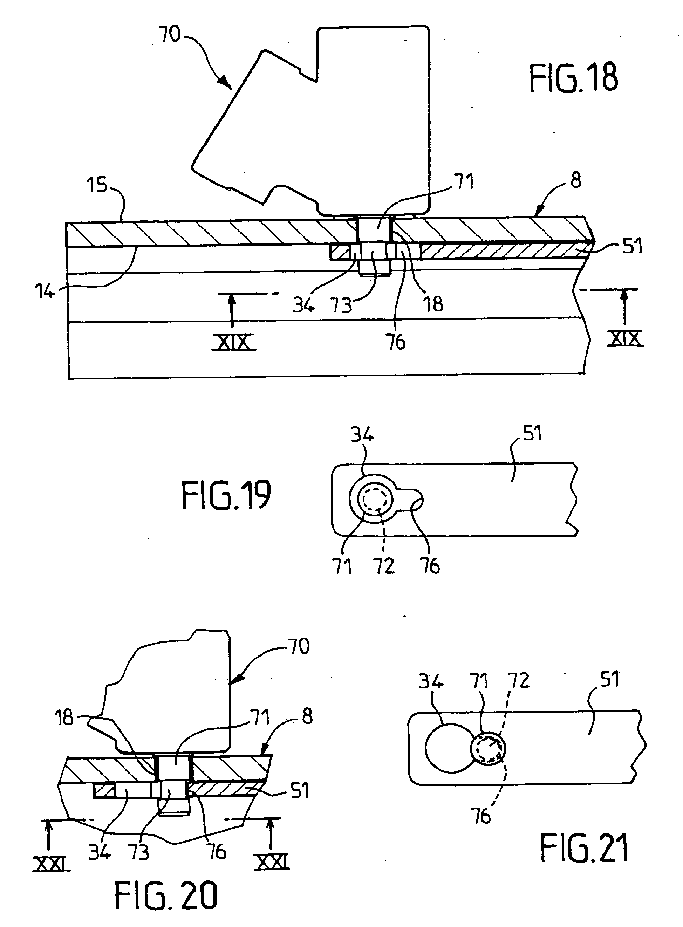

Comme cela est représenté sur les figures 19, 20 et 21, le trou de passage 34 de la tige de maintien mobile 71 appartenant à un actionneur pyrotechnique 70, comporte une partie circulaire ajustée avec la tige de maintien mobile 71, ladite partie circulaire se prolongeant dans le sens du coulissement par un trou oblong 76 plus étroit destiné à recevoir un étranglement 73 ménagé dans la tige de maintien mobile 71 pour assurer le blocage de sa position en cas de choc.

Dans les figures 1 à 4, l'ensemble d'absorption 50 comprend trois éléments d'absorption : un élément d'absorption central 51, et deux éléments d'absorption latéraux 52 et 53. Chaque première extrémité 31 est raccordée à une embase commune 54 munie de deux trous 33 recevant chacun un élément de maintien fixe ou vis de fixation 72 dans un trou 26 correspondant ménagé dans l'élément de raccordement 23 de l'élément support mobile 9.

La deuxième extrémité 32 de l'élément d'absorption centrale 51 comporte un trou de passage 34 d'une tige de maintien mobile 71 suivant son axe et appartenant à un actionneur pyrotechnique 70.

La deuxième extrémité 32 de chaque élément d'absorption latéral 52, 53 comporte un trou de passage 33 d'une tige de maintien fixe 72.

Comme cela est représenté sur les figures 2 à 4, lors d'un choc frontal, l'élément support mobile 9 de la colonne en choc se déplace parallèlement par rapport à l'axe de direction 3. En fonction des différentes données tels que la vitesse d'impact, le poids du conducteur, le port ou le non-port de la ceinture de sécurité, on peut définir et contrôler le niveau d'effort d'amortissement du conducteur. Pour ce faire, l'actionneur pyrotechnique 70 fixé sur l'élément support fixe 8 par un élément de fixation 75 reste engagé ou peut se désengager en fonction des différents paramètres préalablement cités, de façon à déformer la totalité de l'élément de déformation ou seulement une partie.

Selon l'invention, les moyens de commande de déplacement pyrotechniques sont agencés de manière qu'en cas de choc, l'élément support mobile 9 soit relié à l'élément support fixe 8 :
- par aucun élément d'absorption ; ou
- par l'élément d'absorption 30,
de façon que l'élément support mobile 9 relié au tube-corps 2 donc au volant se déplace par rapport à l'élément support fixe 8 en absorbant tout ou partie de l'énergie à dissiper demandée.

Dans le cas où l'ensemble d'absorption d'énergie 40 comporte deux éléments d'absorption 41 et 42 ayant chacun une section déterminée qui lui soit propre de manière à absorber une quantité particulière d'énergie, il y a au moins un élément d'absorption 41, 42 qui a une tige de maintien mobile 71.

Les moyens de commande de déplacement pyrotechniques sont agencés de manière qu'en cas de choc, l'élément support mobile 9 soit relié à l'élément support fixe 8 :
- par aucun élément d'absorption ; ou
- par le premier élément d'absorption 41 ; ou
- par le deuxième élément d'absorption 42 ; ou
- par les deux éléments d'absorption 41 et 42 ;
de façon que l'élément support mobile 9 relié au tube-corps 2 donc au volant se déplace par rapport à l'élément support fixe 8 en absorbant tout ou partie de l'énergie à dissiper demandée.

Dans le cas où l'ensemble d'absorption d'énergie 50, 60 comporte trois éléments d'absorption 51, 52 et 53 - 61, 62 et 63 ayant chacun une section déterminée qui lui soit propre de manière à absorber une quantité particulière d'énergie, il y a au moins un élément d'absorption 51, 52. 53 - 61, 62, 63 qui a une tige de maintien mobile 71.

Les moyens de commande de déplacement pyrotechniques sont agencés de manière qu'en cas de choc, l'élément support mobile 9 soit relié à l'élément support fixe 8 :
- par aucun élément d'absorption ; ou
- par le premier élément d'absorption 51, 61 ; ou
- par le deuxième élément d'absorption 52, 62 ; ou
- par le troisième élément d'absorption 53, 63 ; ou
- par le premier élément d'absorption 51, 61 avec le deuxième élément d'absorption 52, 62 ; ou
- par le premier élément d'absorption 51, 61 avec le troisième élément d'absorption 53, 63 ; ou
- par le deuxième élément d'absorption 52, 62 avec le troisième élément d'absorption 53, 63 ; ou
- par les trois éléments d'absorption 51, 52 et 53 - 61, 62 et 63.
de façon que l'élément support mobile 9 relié au tube-corps 2 donc au volant se déplace par rapport à l'élément support fixe 8 en absorbant tout ou partie de l'énergie à dissiper demandée.

## Revendications

1. Une colonne de direction d'un véhicule automobile, ladite colonne de direction comprenant un dispositif d'absorption modulable d'énergie de ladite colonne de direction de véhicule automobile, qui comprend un arbre de direction (1) monté tournant dans un tube corps (2) autour d'un axe de direction (3), ledit tube-corps (2) est relié à un ensemble support (6) qui est fixé au châssis (10) du véhicule, ledit dispositif d'absorption modulable d'énergie consiste en un élément support fixe (8) qui est solidaire du châssis (10) du véhicule, et un élément support mobile (9) qui est relié à l'élément support fixe (8) afin de constituer l'ensemble support (6), l'élément support mobile (9) est relié et bloqué sur l'élément support fixe (8) à une valeur déterminée afin que ce blocage cesse en cas de choc, et que rentre en action ledit dispositif d'absorption modulable d'énergie qui comporte :
- au moins un ensemble d'absorption d'énergie (40, 50, 60) qui a au moins deux éléments d'absorption de longueur et de section déterminées,
- chaque élément d'absorption comprenant :
. une première portion d'extrémité (31) raccordée à l'élément support mobile (9),
. une portion centrale (35, ... 39) de forme allongée sensiblement suivant la direction de l'effort à amortir, et qui est repliée sur elle-même avec une courbure déterminée autour d'un axe sensiblement perpendiculaire à la direction de l'effort à amortir,
. la portion centrale de chaque élément d'absorption est une lamelle (35, ... 39) de section rectangulaire ou carrée, qui est disposée entre une face d'appui (14) de l'élément support fixe (8) et une face d'appui (25) de l'élément support mobile (9), la longueur et la section de la portion centrale ayant des valeurs déterminées par la quantité d'énergie à absorber,
. une deuxième portion d'extrémité (32) raccordée à l'élément support fixe (8) par une tige de maintien (71, 72), l'élément support fixe (8) étant fixé au châssis (10) du véhicule,
- chaque ensemble d'absorption (40, 50, 60) comprenant deux éléments d'absorption (41, 42) ou trois éléments d'absorption (51, 52, 53 - 61, 62, 63) dont les premières portions d'extrémité (31) forment une seule embase (43, 54, 64), ladite embase (43, 54, 64) comportant au moins un trou (33) recevant un élément de fixation (72) sur l'élément support mobile (9) ;
- au moins une des tiges de maintien qui est une tige de maintien mobile (71) suivant son axe, par l'intermédiaire de moyens de déplacement pyrotechniques, qui sont mis en action par des moyens de commande ;
- de manière qu'en cas de choc, et suivant la valeur des paramètres retenus, l'élément support mobile (9) soit relié à l'élément support fixe (8) par un nombre voulu d'éléments d'absorption (30), de façon que l'élément support mobile (9) relié au tube-corps (2) donc au volant se déplace par rapport à l'élément support fixe (8) en absorbant tout ou partie de l'énergie à dissiper demandée.

2. Colonne de direction selon la revendication 1, **caractérisé en ce que** :
- l'ensemble d'absorption d'énergie (40) comporte deux éléments d'absorption (41, 42) ayant chacun une section déterminée qui lui soit propre de manière à absorber une quantité particulière d'énergie ;
- au moins un élément d'absorption (41, 42) a une tige de maintien mobile (71) ;
- les moyens de commande de déplacement pyrotechnique sont agencés de manière qu'en cas de choc, l'élément support mobile (9) soit relié à l'élément support fixe (8) :
. par aucun élément d'absorption ; ou
. par le premier élément d'absorption (41) ; ou
. par le deuxième élément d'absorption (42) ; ou
. par les deux éléments d'absorption (41, 42) ;
de façon que l'élément support mobile (9) relié au tube-corps (2) donc au volant se déplace par rapport à l'élément support fixe (8) en absorbant tout ou partie de l'énergie à dissiper demandée.

3. Colonne de direction selon la revendication 1, **caractérisé en ce que** :
- l'ensemble d'absorption d'énergie (50, 60) comporte trois éléments d'absorption (51, 52, 53 - 61, 62, 63) ayant chacun une section déterminée qui lui soit propre de manière à absorber une quantité particulière d'énergie ;
- au moins un élément d'absorption (51, 52, 53 - 61, 62, 63) a une tige de maintien mobile (71) ;
- les moyens de commande de déplacement pyrotechnique sont agencés de manière qu'en cas de choc, l'élément support mobile (9) soit relié à l'élément support fixe (8) :
. par aucun élément d'absorption ; ou
. par le premier élément d'absorption (51, 61) ; ou
. par le deuxième élément d'absorption (52, 62) ; ou
. par le troisième élément d'absorption (53, 63) ; ou
. par le premier (51, 61) avec le deuxième élément (52, 62) d'absorption ; ou
. par le premier (51, 61) avec le troisième (53, 63) élément d'absorption ; ou
. par le deuxième (52, 62) avec le troisième (53, 63) élément d'absorption ; ou
. par les trois éléments d'absorption (51, 52, 53 - 61, 62, 63).
de façon que l'élément support mobile (9) relié au tube-corps (2) donc au volant se déplace par rapport à l'élément support fixe (8) en absorbant tout ou partie de l'énergie à dissiper demandée.

4. Colonne de direction selon la revendication 1, **caractérisé en ce que** la lamelle (35) a une section constante.

5. Colonne de direction selon la revendication 1, **caractérisé en ce que** la lamelle (36, 37) a une section variant uniformément.

6. Colonne de direction selon la revendication 1, **caractérisé en ce que** la lamelle (38, 39) a une section variant par paliers.

7. Colonne de direction selon la revendication 1, **caractérisé en ce que** :
- l'élément support fixe (8) comporte une plaque (13) qui se fixe d'un côté (15) contre la structure du véhicule (10), et qui porte de l'autre côté (14) deux montants (11, 12) sensiblement parallèles au plan vertical (4) passant par l'axe de direction (3),
- l'élément support mobile (9) comporte deux montants (21, 22) sensiblement parallèles au plan vertical (4) et un élément de raccordement (23), les deux montants (21, 22) venant s'engager et coulisser en cas de choc dans les deux montants (11, 12) de l'élément support fixe (8), l'élément de raccordement (23) étant situé du côté de l'élément support fixe (8), l'élément de raccordement (23) étant disposé à une certaine distance de la plaque (13) de l'élément support fixe (8) pour permettre de loger l'ensemble d'absorption d'énergie (50) entre la face d'appui (14) de l'élément support fixe (8) et la face d'appui (25) de élément support mobile (9), lesdites faces d'appui (14, 25) se faisant face et étant sensiblement parallèles l'une par rapport à l'autre, et sensiblement perpendiculaires au plan vertical (4) de l'axe de direction (3),
- l'ensemble d'absorption (50) comprend trois éléments d'absorption (51, ... 53) dont chaque première extrémité (31) est raccordée à une embase commune (54) munie de deux trous (33) recevant chacun un élément de fixation (72) dans un trou (26) correspondant aménagé dans l'élément de raccordement (23) ;
- la deuxième extrémité (32) de l'élément d'absorption centrale (51) comporte un trou de passage (34) d'une tige de maintien mobile (71) suivant son axe et appartenant à un actionneur pyrotechnique (70) ;
- la deuxième extrémité (32) de chaque élément d'absorption latéral (52, 53) comporte un trou de passage (33) d'une tige de maintien fixe (72).

8. Colonne de direction selon la revendication 7, **caractérisé en ce que** chaque tige de maintien fixe (72) est constituée par un élément de fixation dans un trou correspondant (16) aménagé dans l'élément support fixe (8).

9. Colonne de direction selon la revendication 7, **caractérisé en ce que** le trou de passage (34) de la tige de maintien mobile (71) appartenant à un actionneur pyrotechnique (70), comporte une partie circulaire ajustée avec la tige de maintien mobile (71), ladite partie circulaire se prolongeant dans le sens du coulissement par un trou oblong (76) plus étroit destiné à recevoir un étranglement (73) aménagé dans la tige de maintien mobile (71) pour assurer le blocage de sa position en cas de choc.

## Claims

1. - An automobile vehicle steering column, said steering column comprising a modular device for absorbing energy on said automobile vehicle steering column, which comprises a steering shaft (1) rotatably mounted in a body-tube (2) about a steering axis (3), said body-tube (2) is connected to a support assembly (6) which is attached upon the chassis (10) of the vehicle, said modular energy absorbing device comprises a fixed support member (8) which is fixed to the vehicle chassis (10), and a movable support member (9) which is connected to the fixed support member (8) so as to constitute the support assembly (6), the movable support member (9) is connected and locked to the fixed support member (8) so that this locking ceases in the event of an impact and the modular energy absorbing device puts into action, said modular energy absorbing device comprising :
- at least an energy absorbing assembly (40, 50, 60) which includes at least two absorbing elements of determined length and cross-section,
- each absorbing element comprising :
. a first terminal portion (31) coupled to the movable support member (9),
. a central portion (35, ... 39) having a shape substantially elongated along the direction of the effort to be absorbed and which is folded back upon itself with a determined degree of curvature about an axis that substantially extends normal to the direction of the effort to be absorbed.
. the central portion of each absorbing element is a strip (35, ... 39) with a rectangular or square cross-section, which is arranged between the support face (14) of the fixed support member (8) and a support face (25) of the movable support member (9), the length and the cross-section of the central portion having values determined by the quantity of energy to be absorbed,
. a second terminal portion (32) coupled to the fixed support member (8) by a retaining pin (71, 72), the fixed support member (8) being fixed to the vehicle chassis (10),
- each absorbing assembly (40, 50, 60) comprising two absorbing elements (41, 42) or three two absorbing elements (51, 52, 53 - 61, 62, 63), the first terminal portions (31) of which shapes one single base (43, 54, 64), said base (43, 54, 64) having an aperture (33) lodging a fastening element (72) on the movable support member (9) ;
- at least one of the retaining pins (71, 72) which is a retaining pin (71, 72) displaceable along his axis by pyrotechnical displacement means (70) that are activated by control means,
- so that in case of an impact and depending upon the value of the chosen parameters, the movable support member (9) is coupled to the fixed support member (8) by a desired number of absorbing elements (30) so that the movable support member (9) coupled to body-tube (2) and thus to the steering wheel is displaced with respect to the fixed support member (8), thus absorbing all or a portion of the required energy to be dissipated.

2. - A steering column according to the claim 1, **characterized in that** :
- the energy absorbing assembly (40) comprises two absorbing elements (41, 42) each having a determined cross-section that is specific for it so as to absorb a particular quantity of energy ;
- at least one absorbing element (41) has a retaining pin (71) ;
- the pyrotechnical displacement control means are so arranged that in the event of an impact the movable support member (9) is connected to the fixed support member (8) :
. without any absorbing element; or
. by the first absorbing element (41) ; or
. by the second absorbing element (42) ; or
. by the two absorbing elements (41, 42) ;
so that the movable support member (9) coupled to body-tube (2) and thus to the steering wheel is displaced with respect to the fixed support member (8) by absorbing all or a portion of the required energy to be dissipated.

3. - A steering column according to the claim 1, **characterized in that** :
- the energy absorbing assembly (50, 60) comprises three absorbing elements (51, 52, 53 - 61, 62, 63) each having a determined cross-section that is specific for it so as to absorb a particular quantity of energy ;
- at least one absorbing element (51, 52, 53 - 61, 62, 63) has a retaining pin (71) ;
- the pyrotechnical displacement control means are so arranged that in the event of an impact the movable support member (9) is connected to the fixed support member (8) :
. without any absorbing element; or
. by the first absorbing element (51, 61) ; or
. by the second absorbing element (52, 62) ; or
. by the third absorbing element (53, 63) ; or
. by the first absorbing element (51, 61) with the second absorbing element (52, 62) ; or
. by the second absorbing element (52, 62) with the third absorbing element (53, 63) ; or
. by the three absorbing elements (51, 52, 53 - 61, 62, 63) ;
so that the movable support member (9) coupled to body-tube (2) and thus to the steering wheel is displaced with respect to the fixed support member (8) by absorbing all or a portion of the required energy to be dissipated.

4. - A steering column according to the claim 1, **characterized in that** the strip (35) has a fixed cross-section.

5. - A steering column according to the claim 1, **characterized in that** the strip (36, 37) has a cross-section varying uniformly.

6. - A steering column according to the claim 1, **characterized in that** the strip (38, 39) has a fixed cross-section varying by steps.

7. - A steering column according to the claim 1, **characterized in that** :
- the fixed support member (8) comprises a plate (13) that is attached on one face (15) against the structure of the vehicle (10) and that on the other face (14) has two guides (11, 12) extending substantially parallel to the vertical plane (4) crossing through the steering axis (3),
- the movable support member (9) comprises two guides (21, 22) substantially parallel to the vertical plane (4) and a coupling element (23), the two guides (21, 22) engaging and sliding in the two guides (11, 12) of the fixed support member (8) in case of an impact, the coupling element (23) being situated on the side of the fixed support element (8), the coupling element (23) being arranged at a certain distance from the plate (13) of the fixed support element (8) to make it possible to house the energy absorbing assembly (50) between the support face (14) of the fixed support element (8) and the support face (25) of the mobile support element (9), said support faces (14, 25) opposing and being substantially parallel to each other and being substantially normal to the vertical plane (4) of the steering axis (3),
- the energy absorbing assembly (50) comprises three absorbing elements (51, ... 53) of which each first end (31) is coupled to a common base (54) provided with two apertures (33) each receiving an attachment element (72) in a corresponding hole (26) made in the coupling element (23) ;
- the second end (32) of the central absorbing element (51) comprises an aperture (34) through which a displaceable retaining pin (71) belonging to a pyrotechnical actuator (70) crosses ;
- the second end (32) of each lateral absorbing element (52, 53) comprises a aperture (33) through which a fixed retaining pin (72) crosses.

8. - A steering column according to the claim 7, **characterized in that** each fixed retaining pin (72) is made up of an attachment element in a corresponding hole (16) made in the fixed support element (8).

9. - A steering column according to the claim 7, **characterized in that** the aperture (34) through which the displaceable retaining pin (71) belonging to a pyrotechnical actuator (70) crosses, comprises a circular portion adjusted with the displaceable retaining pin (71), said circular portion extending in the direction of sliding movement by a narrow oblong hole (76) intended to receive an narrow portion (73) made in the displaceable retaining pin (71) to ensure the locking of its position in case of an impact.

## Patentansprüche

1. - Eine Automobil-Lenksäule mit einer variablen Energieabsorptionsvorrichtung für die besagte Automobil-Lenksäule, bestehend aus einer Lenkwelle (1), die ihrerseits in einem Rohrkörper (2) drehend um eine Lenkachse (3) installiert ist, wobei der Rohrkörper (2) mit einer am Chassis (10) des Fahrzeugs befestigten Trageinheit (6) verbunden ist; die variable Energieabsorptionsvorrichtung besteht aus einem fest mit dem Chassis (10) des Fahrzeugs verbundenen feststehenden Tragelement (8) und einem mit diesem verbundenen beweglichen Tragelement (9), die zusammen die Trageinheit (6) bilden; das bewegliche Tragelement (9) ist mit dem feststehenden Tragelement (8) verbunden und auf diesem mit einem bestimmten Wert blockiert, damit sich die Blockierung im Falle eines Zusammenstoßes löst und die variable Energieabsorptionsvorrichtung in Aktion tritt, die Folgendes umfasst:
- mindestens eine Energieabsorptionseinheit (40, 50, 60), die mindestens zwei Absorptionselemente mit einer bestimmten Länge und einem bestimmten Querschnitt aufweist,
- wobei jedes Absorptionselement Folgendes umfasst:
. einen ersten äußeren Abschnitt (31), der mit dem beweglichen Tragelement (9) verbunden ist,
. einen mittleren Abschnitt (35, ... 39) mit im Wesentlichen in Richtung der zu dämpfenden Kraft länglicher Form, der mit einer bestimmten Krümmung um eine Achse, die im Wesentlichen senkrecht zur Richtung der zu dämpfenden Kraft verläuft, zu sich selbst zurückgebogen ist,
. wobei der mittlere Abschnitt jedes Absorptionselements eine Lamelle (35, ... 39) mit rechteckigem oder quadratischem Querschnitt ist, angeordnet zwischen einer Auflagefläche (14) des feststehenden Tragelements (8) und einer Auflagefläche (25) des beweglichen Tragelements (9), und die Länge und der Querschnitt des mittleren Abschnitts von der Höhe der zu absorbierenden Energie bestimmt werden,
. einen zweiten äußeren Abschnitt (32), der mit dem feststehenden Tragelement (8) durch einen Haltestift (71, 72) verbunden ist, wobei das feststehende Tragelement (8) am Chassis (10) des Fahrzeugs befestigt ist,
- jede Absorptionseinheit (40, 50, 60) umfasst zwei Absorptionselemente (41, 42) oder drei Absorptionselemente (51, 52, 53 - 61, 62, 63), deren erste äußere Abschnitte (31) ein gemeinsames, einziges Fußteil (43, 54, 64) bilden, wobei dieses Fußteil (43, 54, 64) mindestens ein Loch (33) aufweist, das ein Befestigungselement (72) zur Befestigung auf dem beweglichen Tragelement (9) aufnimmt;
- mindestens einen der Haltestifte, der ein in seiner Achse beweglicher Haltestift (71) ist, und zwar beweglich aufgrund pyrotechnischer Verschiebemittel, die durch Betätigungsmittel in Gang gesetzt werden;
- so dass das bewegliche Tragelement (9) im Falle eines Zusammenstoßes je nach dem Wert der gewählten Parameter über eine gewünschte Anzahl von Absorptionselementen (30) mit dem feststehenden Tragelement (8) verbunden wird, was bewirkt, dass sich das mit dem Rohrkörper (2) und folglich mit dem Lenkrad verbundene bewegliche Tragelement (9) gegenüber dem feststehenden Tragelement (8) verschiebt und dabei die gesamte abzubauende Energie oder einen Teil davon, wie gefordert, absorbiert.

2. - Lenksäule nach Anspruch 1, **dadurch gekennzeichnet, dass**:
- die Energieabsorptionseinheit (40) zwei Absorptionselemente (41, 42) umfasst, von denen jedes einen ihm eigenen bestimmten Querschnitt hat, so dass eine ganz bestimmte Energiemenge absorbiert wird;
- mindestens ein Absorptionselement (41, 42) einen beweglichen Haltestift (71) hat;
- die Betätigungsmittel für die pyrotechnische Verschiebung so angeordnet sind, dass das bewegliche Tragelement (9) im Falle eines Zusammenstoßes mit dem feststehenden Tragelement (8) verbunden wird:
. durch keinerlei Absorptionselement oder
. durch das erste Absorptionselement (41) oder
. durch das zweite Absorptionselement (42) oder
. durch die beiden Absorptionselemente (41, 42), so dass sich das mit dem Rohrkörper (2) und folglich mit dem Lenkrad verbundene bewegliche Trag element (9) gegenüber dem feststehenden Tragelement (8) verschiebt und dabei die gesamte abzu bauende Energie oder einen Teil davon, wie gefor dert, absorbiert

3. - Lenksäule nach Anspruch 1, **dadurch gekennzeichnet, dass**
- die Energieabsorptionseinheit (50, 60) zwei Absorptionselemente (51, 52, 53 - 61, 62, 63) umfasst, von denen jedes einen ihm eigenen bestimmten Querschnitt hat, so dass eine ganz bestimmte Energiemenge absorbiert wird;
- mindestens ein Absorptionselement (51, 52, 53 - 61, 62, 63) einen beweglichen Haltestift (71) hat;
- die Betätigungsmittel für die pyrotechnische Verschiebung so angeordnet sind, dass das bewegliche Tragelement (9) im Falle eines Zusammenstoßes mit dem feststehenden Tragelement (8) verbunden wird:
. durch keinerlei Absorptionselement oder
. durch das erste Absorptionselement (51, 61) oder
. durch das zweite Absorptionselement (52, 62) oder
. durch das dritte Absorptionselement (53, 63) oder
. durch das erste (51, 61) zusammen mit dem zweiten Absorptionselement (52, 62) oder
. durch das erste (51, 61) zusammen mit dem dritten Absorptionselement (53, 63) oder
. durch das zweite (52, 62) zusammen mit dem dritten Absorptionselement (53, 63) oder
. durch die drei Absorptionselemente (51, 52, 53 - 61, 62, 63),
so dass sich das mit dem Rohrkörper (2) und folglich mit dem Lenkrad verbundene bewegliche Tragelement (9) gegenüber dem feststehenden Tragelement (8) verschiebt und dabei die gesamte abzubauende Energie oder einen Teil davon, wie gefordert, absorbiert.

4. - Lenksäule nach Anspruch 1, **dadurch gekennzeichnet, dass** die Lamelle (35) einen konstanten Querschnitt hat.

5. - Lenksäule nach Anspruch 1, **dadurch gekennzeichnet, dass** die Lamelle (36, 37) einen sich gleichförmig ändernden Querschnitt hat.

6. - Lenksäule nach Anspruch 1, **dadurch gekennzeichnet, dass** die Lamelle (38, 39) einen sich in Stufen ändernden Querschnitt hat.

7. - Lenksäule nach Anspruch 1, **dadurch gekennzeichnet, dass**
- das feststehende Tragelement (8) eine Platte (13) aufweist, die auf einer Seite (15) am Chassis (10) befestigt ist und auf der anderen Seite (14) zwei Flansche (11, 12) aufweist, die im Wesentlichen parallel zur vertikalen Ebene (4) verlaufen, die durch die Lenkachse (3) geht,
- das bewegliche Tragelement (9) zwei Flansche (21, 22), die im Wesentlichen parallel zur vertikalen Ebene (4) verlaufen, und ein Verbindungselement (23) aufweist, wobei die beiden Flansche (21, 22) im Falle eines Zusammenstoßes in die beiden Flansche (11, 12) des feststehenden Tragelements (8) eingreifen und sich in sie hineinschieben; das Verbindungselement (23) befindet sich auf der Seite des feststehenden Tragelements (8) und ist in einem gewissen Abstand von der Platte (13) des feststehenden Tragelements (8) angeordnet, damit die Energieabsorptionseinheit (50) zwischen der Auflagefläche (14) des feststehenden Tragelements (8) und der Auflagefläche (25) des beweglichen Tragelements (9) Platz findet; diese Auflageflächen (14, 25) liegen einander gegenüber und verlaufen im Wesentlichen parallel zueinander und im Wesentlichen senkrecht zur vertikalen Ebene (4) der Lenkachse (3),
- die Absorptionseinheit (50) drei Absorptionselemente (51, ... 53) umfasst, deren erstes Ende (31) jeweils mit einem gemeinsamen Fußteil (54) mit zwei Löchern (33) verbunden ist, von denen jedes ein Befestigungselement (72) zur Befestigung im entsprechenden Loch (26) des Verbindungselements (23) aufnimmt;
- das zweite Ende (32) des mittleren Absorptionselements (51) ein Durchgangsloch (34) zur Durchführung eines in seiner Achse beweglichen Haltestiftes (71) aufweist, der zu einer pyrotechnischen Betätigungsvorrichtung (70) gehört;
- das zweite Ende (32) des seitlichen Absorptionselements (52) ein Durchgangsloch (33) zur Durchführung eines fixen Haltestiftes (72) aufweist.

8. - Lenksäule nach Anspruch 7, **dadurch gekennzeichnet, dass** jeder fixe Haltestift (72) aus einem Befestigungselement in einem entsprechenden im feststehenden Tragelement (8) vorgesehenen Loch (16) besteht.

9. - Lenksäule nach Anspruch 7, **dadurch gekennzeichnet, dass** das Durchgangsloch (34) des beweglichen Haltestifts (71), der zu einer pyrotechnischen Betätigungsvorrichtung (70) gehört, einen auf den beweglichen Haltestift (71) abgestimmten runden Teil hat, der in Verschieberichtung durch ein engeres Langloch (76) zur Aufnahme einer Einschnürung (73) des beweglichen Haltestiftes (71) verlängert wird, um so dessen Blockierung in seiner Position im Falle eines Zusammenstoßes sicherzustellen.
